# EUROPEAN PATENT SPECIFICATION

(11) **EP 4 518 291 B1**
(45) Date of publication and mention of the grant of the patent: **04.11.2026**
(21) Application number: 23794697.5
(22) Date of filing: 14.02.2023
(51) Int. Cl.: H04L 67/12, H04L 69/321, H04W 4/40

(54) **SOA-BASED INTELLIGENT DRIVING SYSTEM, METHOD AND DEVICE, AND STORAGE MEDIUM**
SOA-BASIERTES INTELLIGENTES ANTRIEBSSYSTEM, VERFAHREN UND VORRICHTUNG SOWIE SPEICHERMEDIUM
SYSTÈME, PROCÉDÉ ET DISPOSITIF DE CONDUITE INTELLIGENTE BASÉE SUR SOA, ET SUPPORT DE STOCKAGE

(30) Priority: 28.04.2022 CN 202210470530
(43) Date of publication of application: 05.03.2025
(73) Proprietor: Voyah Automobile Technology Company Ltd., Hanyang District Wuhan City, Hubei 430050 (CN)
(72) Inventor: YANG, Ying, Wuhan, Hubei 430050 (CN); LIU, Huikai, Wuhan, Hubei 430050 (CN); FU, Bin, Wuhan, Hubei 430050 (CN); LU, Fang, Wuhan, Hubei 430050 (CN); WANG, Junjun, Wuhan, Hubei 430050 (CN); TU, Ningning, Wuhan, Hubei 430050 (CN); SHEN, Chen, Wuhan, Hubei 430050 (CN); LIU, Cheng, Wuhan, Hubei 430050 (CN); FANG, Yangli, Wuhan, Hubei 430050 (CN); WEI, Gang, Wuhan, Hubei 430050 (CN)
(74) Representative: Pezzoli, Ennio
(86) International application number: PCT/CN2023/075943
(87) International publication number: WO 2023/207261

(56) References cited:
- CN-A- 106 128 140
- CN-A- 106 447 542
- CN-A- 114 194 210
- CN-A- 114 205 386
- CN-A- 114 281 075
- CN-A- 114 866 586
- US-A1- 2011 130 894
- YANG, JIE; TIAN, CHANG; ZHAO, WENDONG; FU, YI; ZENG, LI: "Design and Implementation of Service-Oriented Vehicle Management System", JOURNAL OF MILITARY COMMUNICATIONS TECHNOLOGY, CN, vol. 34, no. 04, 25 December 2013 (2013-12-25), CN, pages 59 - 64, XP009550061

## Description

### CROSS-REFERENCE TO RELATED APPLICATIONS

### TECHNICAL FIELD

The invention relates to a field of intelligent drive control technology, and in particular to an intelligent drive system based on a SOA architecture, an intelligent drive method based on a SOA architecture, an intelligent drive apparatus based on a SOA architecture and a computer-readable storage medium.

### BACKGROUND

With the accelerated integration of technologies such as new-generation information communication and new energy with an automotive industry, technology start-up companies such as information communication and Internet technology companies are fully involved in the automotive industry, making an automotive intelligent drive technology to be integrated with modem sensing technology, information and communication technology, automatic control technology and artificial intelligence. The automotive intelligent drive technology has great potential in reducing traffic accidents, alleviating traffic congestion, reducing energy consumption and protecting environment. Intelligent drive refers to a technology by which machines help human drivers to drive automobiles, and completely replace human drivers under special circumstances. An essence of the Intelligent drive is a cognitive engineering problem of attention attraction and attention distraction. For example, the intelligent drive can use computer systems to achieve an automatic drive state with almost no human intervention, and can also use feedback results from an intelligent drive system to prompt human drivers to respond to an actual drive situation.

However, since an intelligent drive function is often implemented by an application running on a domain controller, and applications for electronic control units in various vehicles are relatively independently developed, an intelligent drive system, when needing to adapt to several different vehicle models so that the intelligent drive system can be interfaced to external systems composed of different sensors, is required to have several applications of the intelligent drive system modified to achieve an adaptation. That is, operations of process of this adaptation are relatively cumbersome and there is a problem of low interfacing efficiency of the adaptation. At the same time, if it is required to adjust and upgrade in-vehicle functions and add or update the in-vehicle electronic control unit, a large workload of software development will be involved, that is, there is a problem of high secondary development costs.

### SUMMARY

An intelligent drive system, method, apparatus and storage medium based on SOA (Service-Oriented Architecture) architecture are provided according to embodiments of the invention, which solve problems of low efficiency of adaptations between the intelligent drive system and different vehicle models and high secondary development costs existing in related art by utilizing one or more embodiments of the invention.

In a first aspect of the invention, an intelligent drive system based on a SOA architecture is provided, including: a sensor layer service, a control layer service, a coordination layer service and a management layer service which are constructed based on SOA, and are independent from one another and perform a data communication through a service interface. The sensor layer service is configured to be connected with various sensors based on the service interface, and deserialize a raw data output by each sensor into a SOA gateway data. The control layer service is configured to process the SOA gateway data to obtain a basic control data, and the basic control data includes a vehicle operation control data, a sensor state data, an obstacle attribute data and a point cloud data. The coordination layer service is configured to receive a control request data sent by an external domain controller, and determine a vehicle auxiliary information according to the basic control data, and the vehicle auxiliary information includes an obstacle state information, a time-to-collision of obstacle and a positioning information of vehicle. The management layer service is configured to arbitrate operating conditions of a vehicle according to the control request data, the basic control data and the vehicle auxiliary information, and send the operating conditions to the control layer service through the coordination layer service. The control layer service is also configured to control the vehicle based on the operating conditions.

In a second aspect of the invention, an intelligent drive method based on a SOA architecture is also provided, which is applied to the above intelligent drive system based on the SOA architecture, and may include the following steps: a sensor layer service deserializes a raw data output by various sensors into a SOA gateway data and send the SOA gateway data to a control layer service; the control layer service processes the SOA gateway data to obtain a basic control data and send the basic control data to a coordination layer service, the basic control data including a vehicle operation control data, a sensor state data, an obstacle attribute data and a point cloud data; the coordination layer service receives a control request data sent by an external domain controller, and determines a vehicle auxiliary information based on the basic control data, and sends the basic control data, the vehicle auxiliary information and the control request data to a management layer service, the vehicle auxiliary information including an obstacle state information, a time-to-collision of obstacle and a positioning information of vehicle; the management layer service arbitrates operating conditions of a vehicle based on the basic control data, the vehicle auxiliary information and the control request data, and sends the operating conditions to the control layer service through the coordination layer service; the control layer service controls the vehicle based on the operating conditions.

In a third aspect of the invention, an intelligent drive apparatus based on a SOA architecture is provided, including: a memory and a processor. The memory stores at least one instruction which is loaded and executed by the processor to implement the above intelligent drive method based on the SOA architecture.

In a fourth aspect of the invention, a computer-readable storage medium is provided which stores a computer program. When the computer program is executed by a processor, the above intelligent drive method based on the SOA architecture is implemented.

### BRIEF DESCRIPTION OF DRAWINGS

In order to more clearly illustrate technical solutions in embodiments of the invention, the accompanying drawings required for use in description of the embodiments will be briefly introduced below. Obviously, the accompanying drawings described below are only some embodiments of the invention. For those skilled in the art, other accompanying drawings can be obtained based on these accompanying drawings without creative work.
FIG. 1 shows an exemplary structural block diagram of an intelligent drive system based on a SOA architecture according to some embodiments of the invention.
FIG. 2 shows an exemplary structural detail diagram of an intelligent drive system based on a SOA architecture according to some embodiments of the invention.
FIG. 3 shows an exemplary structural diagram of a sensor layer service in FIG. 1.
FIG. 4 shows an exemplary structural diagram of a control layer service in FIG. 1.
FIG. 5 shows an exemplary structural diagram of a coordination layer service in FIG. 1.
FIG. 6 shows an exemplary structural diagram of a management layer service in FIG. 1.
FIG. 7 shows an exemplary flowchart of an intelligent drive method based on a SOA architecture according to some embodiments of the invention.
FIG. 8 shows an exemplary structural diagram of an intelligent drive apparatus based on a SOA architecture according to some embodiments of the invention.

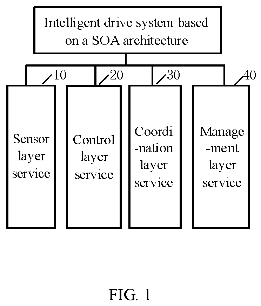

In the accompanying drawings, corresponding relationships between reference signs and component names in FIG. 1 to FIG. 8 are as follows:

| Reference signs | Name | Reference signs | Name |
|---|---|---|---|
| 10 | sensor layer service | 25 | inertial sensor data processing module |
| 20 | control layer service | 31 | second hard switch data transmission module |
| 30 | coordination layer service | 32 | positioning module |
| 40 | management layer service | 33 | integration module |
| 11 | hard switch data transfer module | 34 | regulation and control module |
| 12 | chassis data transfer module | 35 | prediction module |
| 13 | camera data transfer module | 36 | state monitoring module |
| 141 | lidar data transfer submodule | 37 | vehicle body domain module |
| 142 | millimeter wave radar data transfer submodule | 38 | data upload module |
| 143 | ultrasonic radar data transfer submodule | 39 | interface display module |
| 15 | inertial sensor data transfer module | 310 | HDMap map integration positioning submodule |
| 21 | first hard switch data transmission module | 41 | diagnostic module |
| 22 | chassis data processing module | 42 | management module |
| 23 | camera data processing module | 43 | drive module |
| 241 | lidar data processing submodule | 44 | parking module |
| 242 | millimeter wave radar data processing submodule | 45 | arbitration module |
| 243 | ultrasonic radar data processing submodule | 24 | radar data processing module |
| 14 | radar data transfer module | | |

### DESCRIPTION OF EMBODIMENTS

In order to make purposes, technical solutions and advantages of the embodiments of the invention clearer, technical solutions in the embodiments of the invention will be clearly and completely described below in conjunction with the accompanying drawings for the embodiments of the invention. Obviously, described embodiments are a portion of the embodiments of the invention, rather than all of the embodiments. Based on the embodiments in the invention, all other embodiments obtained by those skilled in the art without making any creative work shall fall within a scope of protection sought by the invention.

An intelligent drive system, method, device and storage medium based on SOA (Service-Oriented Architecture) architecture are provided according to the embodiments of the invention, which solve problems of low efficiency of adaptation between the intelligent drive system and different vehicle models as well as high secondary development costs existing in related art.

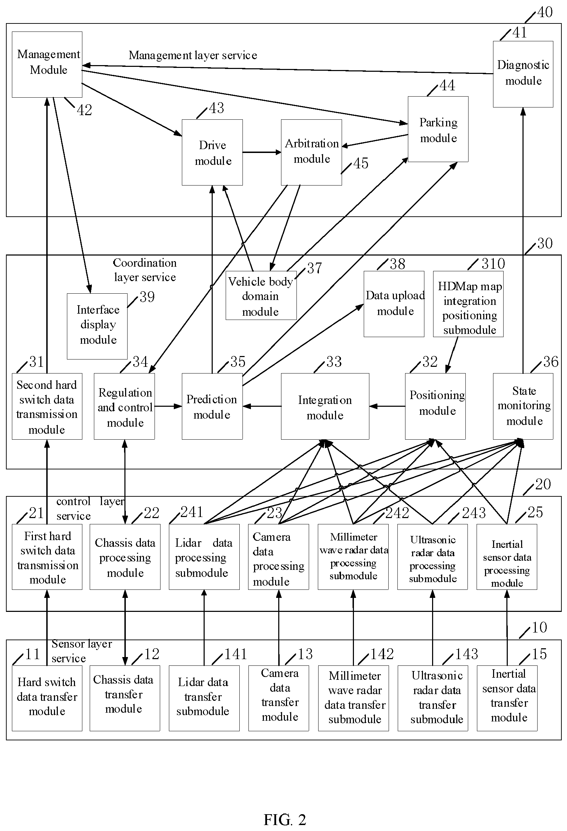

As shown in FIG. 1 and FIG. 2, an intelligent drive system based on a SOA architecture is provided according to an embodiment of the invention, which may include: a sensor layer service 10, a control layer service 20, a coordination layer service 30 and a management layer service 40 which are constructed based on SOA and which are independent from one another and perform data communication via a service interface. The sensor layer service 10 is configured to connect to various sensors based on a service interface, and deserialize a raw data output by various sensors into a SOA gateway data. The control layer service 20 is configured to process the SOA gateway data sent by the sensor layer service 10 to obtain a basic control data, and the basic control data includes a vehicle operation control data, a sensor state data, an obstacle attribute data and a point cloud data. The coordination layer service 30 is configured to receive a control request data sent by an external domain controller, and determine a vehicle auxiliary information according to the basic control data sent by the control layer service 20, and the vehicle auxiliary information includes an obstacle state information, a time-to-collision of obstacle and a positioning information of vehicle. The management layer service 40 is configured to arbitrate and obtain operating conditions of a vehicle according to the control request data, the basic control data and the vehicle auxiliary information, and send the operating conditions to the control layer service 20 through the coordination layer service 30. The control layer service 20 is also configured to control the vehicle based on the operating conditions.

In some embodiments, based on current electronic and electrical architecture and corresponding sensor hardware resources, a Sensor layer service (i.e., the sensor layer service 10) is sorted out and defined. Secondly, a Control layer service (i.e., the control layer service 20) is defined based on sensor data preprocessing requirements, and the Sensor layer service is associated with various Control layer services. Then, a Coordination layer service (i.e., the coordination layer service 30) is defined according to structural divisions among different domains and datas required for mutual delivery, and the Control layer service is associated with various Coordination layer services. Then, a Management layer service (i.e., the management layer service 40) is defined according to usage scenarios of user, and the Coordination layer service is associated with various Management layer services. Therefore, a four-layer service architecture including the Sensor layer service, the Control layer service, the Coordination layer service, and the Management layer service is constructed, and finally, the four-layer service architecture is deployed into different electronic controllers according to the electronic and electrical architecture and a network topology.

In order to identify associated various hardware sensors according to system functions, associate various hardware sensors with electronic control units in hardware resources, and convert underlying signals into service signals, the Sensor layer service is created and deployed onto a controller of a hardware interface carrier according to an embodiment of the invention. An input of a Sensor layer service is an underlying binary data or hexadecimal data. Underlying datas (such as CAN (Controller Area Network) or LVDS (Low-Voltage Differential Signaling) or the like) can be converted into readable service signals through the service interface and according to relevant signal encoding format. In particular, after a downstream service interface (a Control layer service) is defined here, various sensor modules corresponding to the Sensor layer service can be flexibly replaced to correspond to different types of sensor systems in different vehicle models, thereby reducing frequencies of secondary development.

Since datas transferred from the Sensor layer service needs to be preprocessed separately, the Control layer service is created according to an embodiment of the invention to preprocess the datas transferred from the Sensor layer service to obtain a basic control data including a vehicle operation control data, a sensor state data, an obstacle attribute data, and a point cloud data. The Control layer service is deployed to a controller (such as a GPU) with strong computing power. Optionally, for image data, a deep learning can be utilized to identify obstacles, that is, an input is an image data and an output is an obstacle list. In particular, a recognition algorithm here is strongly related to a deployed electronic controller. Therefore, after an upstream and downstream (Sensor layer service and Coordination layer service) service interfaces are specified, algorithms can be flexibly changed to adapt to an electronic controller to ensure a speed and accuracy of the recognition algorithm and achieve an optimal perception effect.

In order to meet data requirements (such as HMI (Human Machine Interface) display requirements, HDMap high-precision map data requirements ) of other domains (i.e., control domains other than the intelligent drive system in the vehicle) and the data cross-calculation requirements among different modules of this domain (i.e., the intelligent drive system), the Coordination layer service is created according to an embodiment of the invention and is deployed to a controller (such as a CPU) that can handle complex logical judgments. The Coordination layer service, which is similar to the Control layer service, is also strongly related to the electronic controller, and can also flexibly change the algorithm to adapt to the electronic controller to achieve an optimal integration effect.

The Management layer service is created according to an embodiment of the invention and is deployed to a corresponding domain controller. On the basis of the Management layer service, scenario services can be abstracted through functional analysis and apparatus analysis, and user scenarios can be defined.

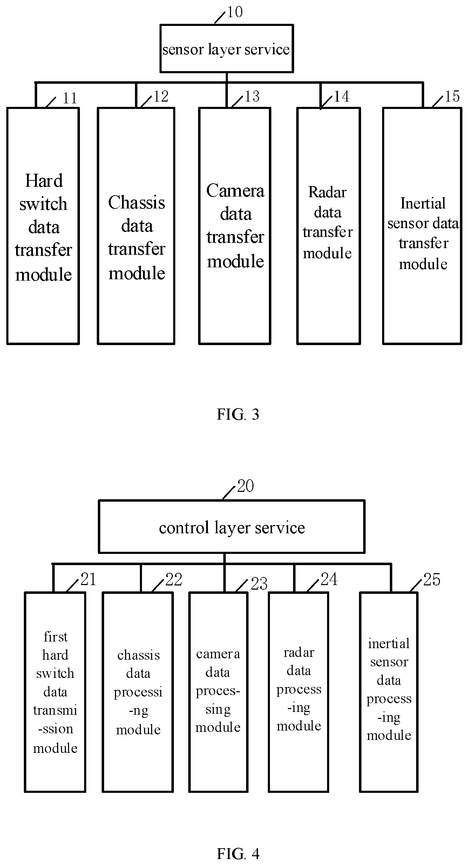

In some embodiments, as shown in FIG. 2 and FIG. 3, the sensor layer service 10 may include a hard switch data transfer module 11, a chassis data transfer module 12, a camera data transfer module 13, a radar data transfer module 14 and an inertial sensor data transfer module 15. In some embodiments, the radar data transfer module 14 includes a lidar data transfer submodule 141, a millimeter wave radar data transfer submodule 142 and an ultrasonic radar data transfer submodule 143.

The hard switch data transfer module 11 is configured to deserialize a raw data output by a hard switch into a SOA gateway data to obtain the SOA gateway data of the hard switch, and send the SOA gateway data of the hard switch to the control layer service 20. The chassis data transfer module 12 is configured to deserialize a raw data output by a chassis into a SOA gateway data to obtain the SOA gateway data of the chassis, and send the SOA gateway data of the chassis to the control layer service 20. The camera data transfer module 13 is configured to deserialize a raw data output by a camera into a SOA gateway data to obtain the SOA gateway data of the camera, and send the SOA gateway data of the camera to the control layer service 20. The radar data transfer module 14 is configured to deserialize a raw data output by a radar into a SOA gateway data to obtain the SOA gateway data of the radar, and send the SOA gateway data of the radar to the control layer service 20. The inertial sensor data transfer module 15 is configured to deserialize a raw data output by an inertial sensor into a SOA gateway data to obtain the SOA gateway data of the inertial sensor, and send the SOA gateway data of the inertial sensor to the control layer service 20.

In some embodiments, the hard switch data transfer module 11 deserializes a raw data output by a hard switch into a SOA gateway data mainly according to a data format of a hard switch (such as a button) signal. The chassis data transfer module 12 deserializes a raw data output by a chassis into a SOA gateway data mainly according to a data format of a control signal, for instance, converts a binary data output by the chassis into a readable data structure such as an accelerator pedal data.

The lidar data transfer submodule 141 deserializes a raw data output by a lidar into a SOA gateway data mainly according to a data format of a lidar signal, for instance , converts a hexadecimal data output by the lidar into a readable data structures such as a point cloud data. The millimeter wave radar data transfer submodule 142 deserializes a raw data output by a millimeter wave radar into a SOA gateway data mainly according to a data format of a millimeter wave signal, for instance , converts a hexadecimal data or a CAN signal output by the millimeter wave radar into readable data structures such as a point cloud data, an acceleration, and a speed. The ultrasonic radar data transfer submodule 143 deserializes a raw data output by an ultrasonic radar into a SOA gateway data mainly according to a data format of an ultrasonic signal, for instance, converts a CAN signal output by the ultrasonic radar into a readable data structure such as an obstacle information.

The camera data transfer module 13 deserializes a raw data output by a camera into a SOA gateway data mainly according to a data format of a camera signal, for instance , converts a hexadecimal data output by the camera into a readable data structure such as a specific image data. The inertial sensor data transfer module 15 deserializes a raw data output by an IMU into a SOA gateway data mainly according to a data format of an IMU inertial signal, for instance, converts a CAN signal output by the IMU into a readable data structure such as an inertial navigation acceleration data.

In some embodiments, as shown in FIG. 2 and FIG. 4, the control layer service 20 may include a first hard switch data transmission module 21, a chassis data processing module 22, a camera data processing module 23, a radar data processing module 24 and an inertial sensor data processing module 25. In some embodiments, the radar data processing module 24 includes a lidar data processing submodule 241, a millimeter wave radar data processing submodule 242 and an ultrasonic radar data processing submodule 243.

The first hard switch data transmission module 21 is configured to transmit a SOA gateway data of a hard switch sent by the hard switch data transfer module 11 to the coordination layer service 30. The chassis data processing module 22 is configured to obtain a vehicle operation control data based on the SOA gateway data of the chassis sent by the chassis data transfer module 12, and send the vehicle operation control data to the coordination layer service 30, and receive operating conditions sent by the coordination layer service 30, and control the vehicle based on the operating conditions. The camera data processing module 23 is configured to obtain a camera sensor state data, a first obstacle attribute data and an image point cloud data based on the SOA gateway data of the camera sent by the camera data transfer module 13, and send the camera sensor state data, the first obstacle attribute data and the image point cloud data to the coordination layer service 30. The radar data processing module 24 is configured to obtain a radar sensor state data, a second obstacle attribute data and a radar point cloud data based on the SOA gateway data of the radar sent by the radar data transfer module, and send the radar sensor state data, the second obstacle attribute data and the radar point cloud data to the coordination layer service 30. The inertial sensor data processing module 25 is configured to obtain an inertial sensor state data based on the SOA gateway data of the inertial sensor sent by the inertial sensor data transfer module 15, and send the SOA gateway data of the inertial sensor and the inertial sensor state data to the coordination layer service 30.

In some embodiments, the first hard switch data transmission module 21 is configured to transmit the SOA gateway data of the hard switch sent by the hard switch data transfer module 11 to the coordination layer service 30. The chassis data processing module 22 is configured to process the SOA gateway data of the chassis into the vehicle operation control data such as a drive lateral control, a drive longitudinal control, a parking lateral control, a parking longitudinal control, and send the vehicle operation control data to the coordination layer service 30, and receive the operating conditions sent by the coordination layer service 30, and control the vehicle based on the operating conditions.

The camera data processing module 23 is configured to process a Camera image data to obtain a sensor state such as a current voltage state and the like, and deliver the sensor state to a state monitoring module 36, and obtain an obstacle list (i.e. the first obstacle attribute data, such as a size and type of an obstacle) through neural network, tracking, clustering and the like, and deliver the obstacle list to an integration module 33. Secondly, a feature point list can be obtained through extracting and processing feature points and then the feature point list is delivered to a positioning module 32.

The lidar data processing submodule 241 is configured to process a lidar data to obtain a sensor state such as a current voltage state and the like, and deliver the sensor state to the state monitoring module 36, and obtain an obstacle list (i.e., the second obstacle attribute data, such as a size and type of an obstacle) through intensity screening, clustering, tracking and other methods, and deliver the obstacle list to the integration module 33. **In** addition, a point cloud information of the lidar is transmitted to the positioning module 32.

The millimeter wave radar data processing submodule 242 is configured to process a millimeter wave radar data to obtain a sensor state such as a current voltage state and the like, and deliver the sensor state to the state monitoring module 36, and obtain an obstacle list through intensity screening, clustering, tracking and other methods, and deliver the obstacle list to the integration module 33. **In** addition, a point cloud information of a millimeter wave radar is transmitted to the positioning module 32.

The ultrasonic radar data processing submodule 243 is configured to process an ultrasonic data to obtain a sensor state such as the current voltage state and the like, and deliver the sensor state to the state monitoring module 36, and determine an obstacle position through methods such as triangulation positioning among multiple ultrasonic sensors, and obtain an obstacle list, and deliver the obstacle list to the integration module 33.

The inertial sensor data processing module 25 is configured to transmit an IMU data to the positioning module 32, and obtain a sensor state such as a current voltage state and the like, and deliver the sensor state to the state monitoring module 36.

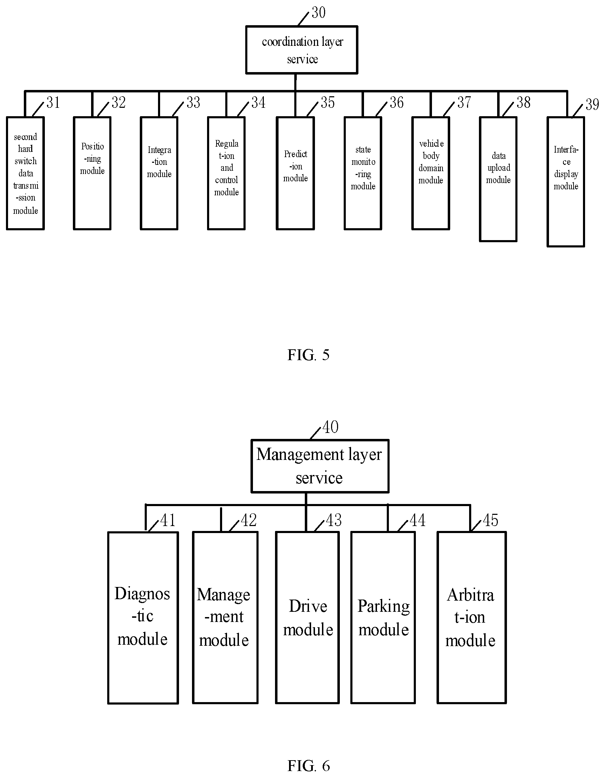

**In** some embodiments, as shown in FIG. 2 and FIG. 5, the coordination layer service 30 may include a second hard switch data transmission module 31, a positioning module 32, an integration module 33, a regulation and control module 34, a prediction module 35, a state monitoring module 36 and a vehicle body domain module 37. The second hard switch data transmission module 31 is configured to transmit a SOA gateway data of a hard switch sent by a first hard switch data transmission module 21 to the management layer service 40. The positioning module 32 is configured to determine a positioning information of vehicle based on an image point cloud data sent by a camera data processing module 23, a radar point cloud data sent by a radar data processing module, a SOA gateway data of an inertial sensor sent by an inertial sensor data processing module 25 and a map request data sent by an external domain controller, and send the positioning information of vehicle to the integration module 33. The integration module 33 is configured to determine an obstacle state information based on a first obstacle attribute data sent by the camera data processing module 23, a second obstacle attribute data sent by the radar data processing module and the positioning information of vehicle sent by the positioning module 32, and send the obstacle state information to the prediction module 35. The regulation and control module 34 is configured to receive a vehicle operation control data sent by a chassis data processing module 22, and determine a self vehicle movement trajectory according to the vehicle operation control data, and send the self vehicle movement trajectory to the prediction module 35, and send operating conditions sent by the management layer service 40 to the chassis data processing module 22. The prediction module 35 is configured to calculate a time-to-collision of obstacle based on the self vehicle movement trajectory and the obstacle state information which is sent by the integration module 33, and send the time-to-collision of obstacle and obstacle state information to the management layer service 40. The state monitoring module 36 is configured to send a camera sensor state data sent by the camera data processing module 23, a radar sensor state data sent by the radar data processing module 24 and an inertial sensor state data sent by the inertial sensor data processing module 25 to the management layer service 40. The vehicle body domain module 37 is configured to send a control request data sent by the external domain controller to the management layer service 40, and send an external domain control data sent by the management layer service 40 to the external domain controller, so that the external domain controller can control an external domain of vehicle based on the external domain control data.

**In** some embodiments, the coordination layer service 30 also includes a data upload module 38. The data upload module 38 is configured to receive the time-to-collision of obstacle and the obstacle state information sent by the prediction module 35, and forward the time-to-collision of obstacle and obstacle state information to the external domain controller, so that the external domain controller can draw an obstacle map based on received time-to-collision of obstacle and obstacle state information.

The second hard switch data transmission module 31 transmits the SOA gateway data of the hard switch sent by the first hard switch data transmission module 21 to a management module 42 in the management layer service 40.

The positioning module 32 is configured to receive an original point cloud of the lidar data processing submodule 241, a feature point cloud of the camera data processing module 23, an original radar point cloud of the millimeter wave radar data processing submodule 242, a positioning data of the inertial sensor data processing module 25, and the map request data sent by the external domain controller (the map request data can be obtained from a HDMap map integration positioning submodule 310, that is, the HDMap map integration positioning submodule 310 receives a map data information from an external domain (that is, a HDMap high-precision map domain) of the Control layer service and forwards the map data information to the positioning module 32), and outputs a high-precision positioning information to the integration module 33.

The integration module 33 is configured to receive the obstacle information output by the lidar data processing submodule 241, an obstacle information output by the camera data processing module 23, an obstacle information output by the millimeter wave radar data processing submodule 242, an obstacle information output by the ultrasonic radar data processing submodule 243 of the Control layer service, and the positioning information of the positioning module 32 of the Coordination layer service, and then calculate an integrated obstacle information (i.e., an obstacle state information, such as a location of an obstacle, traffic light information and the like) by obstacle matching, tracking and other methods, and output the integrated obstacle information to the prediction module 35.

The regulation and control module 34 is configured to receive a vehicle control signal (i.e., the operating conditions) such as an acceleration amount and a brake amount delivered by the arbitration module 45 in the Management layer service, and receive the vehicle operation control data sent by the chassis data processing module 22, and determine the self vehicle movement trajectory based on the vehicle operation control data, and send the self vehicle movement trajectory to the prediction module 35. Optionally, The regulation and control module 34 is also configured to send the operating conditions to the chassis data processing module 22 of the Control layer service for controlling a vehicle.

The prediction module 35 is configured to calculate a TTC (i.e., time-to-collision) of obstacle based on the self vehicle movement trajectory delivered by the regulation and control module 34 and the obstacle information delivered by the integration module 33, and deliver the time-to-collision of obstacle and obstacle state information to the data upload module 38, various functional sub-modules in a drive module 43 and various functional sub-modules in a parking module 44 of the Management layer service.

The state monitoring module 36 is configured to receive sensor states such as a current voltage, a current and the like of various sensor modules of the Control layer service and output the sensor states to a diagnosis module 41 of the Management layer service.

The vehicle body domain module 37 (exposed to an external domain) is configured to receive relevant requests from the arbitration module 45 of the Management layer service and forward the relevant requests to the external domain (for example, to receive a request for turning on hazard lights and send it to a Body vehicle body domain), so that the external domain controller can control an external domain of vehicle based on the external domain control data. At the same time, the vehicle body domain module 37 can receive external domain requests and send the external domain requests to the drive module 43 and parking module 44 of the Management layer service (for example, to receive a request from a **HMI** domain of a central controller for turning on an AVM (Around View Monitor) function and forward it to the parking module 44 of the Management layer service).

The data upload module 38 (exposed to the external domain) is configured to receive the time-to-collision of obstacle and obstacle state information from the prediction module 35, and forward the time-to-collision of obstacle and obstacle state information to the external domain, so that the external domain controller can draw an obstacle map based on the time-to-collision of obstacle and obstacle state information (for example, to forward states and TTC informations of obstacles to the **HMI** domain to draw a 3D obstacle map on the central controller).

Optionally, the coordination layer service 30 further includes an interface display module 39 (exposed to the external domain), which is configured to receive an interface display request from a management module 42 of the Management layer service and output display frames to the external domain (e.g, HMI domain).

In some embodiments, as shown in FIG. 2 and FIG. 6, the management layer service 40 may include a diagnosis module 41, a management module 42, a drive module 43, a parking module 44 and an arbitration module 45. The diagnosis module 41 is configured to summarize a camera sensor state data, a radar sensor state data and an inertial sensor state data sent by a state monitoring module 36 to obtain a sensor-state summary result, and send the sensor-state summary result to the management module 42. The management module 42 is configured to obtain a judgment result on whether to turn on an intelligent drive function based on the SOA gateway data of the hard switch sent by the second hard switch data transmission module 31 and the sensor-state summary result, and send the judgment result to the drive module 43 and the parking module 44. The drive module 43 is configured to decide a drive condition based on the judgment result, the time-to-collision of obstacle and obstacle state information which are sent by the prediction module 35, and the control request data of the external domain controller sent by the vehicle body domain module 37, and send the drive condition to the arbitration module 45. The parking module 44 is configured to decide a parking condition based on the judgment result, the time-to-collision of obstacle and obstacle state information sent by the prediction module 35, and the control request data of the external domain controller sent by the vehicle body domain module 37, and send the parking condition to the arbitration module 45. The arbitration module 45 is configured to arbitrate and obtain the operating conditions of a vehicle based on the drive condition and the parking condition, and send the operating conditions to the regulation and control module 34.

In some embodiments, the diagnosis module 41 is configured to receive state informations of various sensors sent by the state monitoring module 36 of the Coordination layer service, and summarize the state informations to the management module 42 for making judgments.

The management module 42 is configured to receive a hardware button signal of the Coordination layer service (i.e., a HardSwitch transmission data), and to judge, in combination with a diagnosis result of the diagnosis module 41, whether to turn on a relevant intelligent drive function, and send a judgment result to the interface display module 39 of the Coordination layer service, the drive module 43 and the parking module 44 of the Management layer service.

The drive module 43 is configured to receive an activation request from the management module 42, the obstacle information sent by the prediction module 35 of the Coordination layer service, and an activation request from the vehicle body domain module 37 of the Coordination layer service, and send decision results for corresponding function (i.e., the drive conditions such as whether to accelerate, decelerate or move to an adjacent lane and the like) to the arbitration module 45.

The parking module 44 is configured to receive an activation request from the management module 42, the obstacle information sent by the prediction module 35 of the Coordination layer service, and an activation request from the vehicle body domain module 37, and send decision results for corresponding function (i.e., the parking conditions such as whether to reverse or move to a designated parking space and the like) to the arbitration module 45.

The arbitration module 45 is configured to receive the decision results of the drive module 43 and the parking module 44 to make judgments and arbitrations, and send final decision results (i.e., the operating conditions of a vehicle such as accelerating to 50 km/h or laterally accelerating to 2 m/s and the like) to the regulation and control module 34 of the Coordination layer service for controlling the vehicle, and send requests (such as turning on hazard lights or turning on headlights and the like) for the external domain to the vehicle body domain module 37 of the Coordination layer service.

It can be seen that a received sensor data is converted into a gateway signal of service-oriented architecture (SOA). The SOA gateway signal is extracted, calculated and judged to generate a gateway signal of control service of an actuator. Instructions converted from the SOA gateway signal are sent to an actuator of a vehicle to realize an intelligent drive. Therefore, for external interactions, a service interface is generally used for linkage to adapt to different sensors of different vehicle models to reduce a frequency of secondary development. For internal interactions, a data communication uses a service interface to link a replaceable perception algorithm to adapt to domain controllers with different computing powers/architectures to achieve an optimal perception effect.

In summary, hardware resources for controller of an entire vehicle are abstracted, decomposed and defined in the invention, to realize a service orientation of the hardware resources within the entire vehicle, to realize a unification of software architectures and the hardware resources within the entire vehicle, and to facilitate a decoupling of software module to improve development efficiency and reduce maintenance costs. For example, as sensors are different for different vehicle models, an architecture based on SOA can be guaranteed to remain unchanged as a whole to reduce a frequency of secondary development. For adaption of domain controllers with different computing powers/architectures, when different data processing methods are required to be used, an implementation method in a corresponding module is only required to be replaced, while other modules would not be changed. In this way, an optimal perception effect can be achieved without making major changes to an overall architecture.

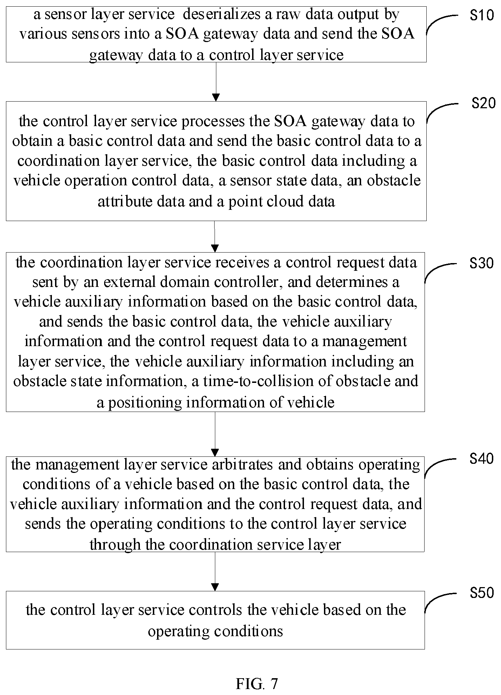

As shown in FIG. 7, an intelligent drive method based on a SOA architecture is also provided according to an embodiment of the invention, which is applied to the above intelligent drive system based on the SOA architecture, and may include the following steps. In Step S10: a sensor layer service deserializes a raw data output by various sensors into a SOA gateway data and send the SOA gateway data to a control layer service. In Step S20: the control layer service processes the SOA gateway data to obtain a basic control data and send the basic control data to a coordination layer service, the basic control data including a vehicle operation control data, a sensor state data, an obstacle attribute data and a point cloud data. In Step S30: the coordination layer service receives a control request data sent by an external domain controller, and determines a vehicle auxiliary information based on the basic control data, and sends the basic control data, the vehicle auxiliary information and the control request data to a management layer service, the vehicle auxiliary information including an obstacle state information, a time-to-collision of obstacle and a positioning information of vehicle. In Step S40: the management layer service arbitrates and obtains operating conditions of a vehicle based on the basic control data, the vehicle auxiliary information and the control request data, and sends the operating conditions to the control layer service through the coordination layer service. In Step S50: the control layer service controls the vehicle based on the operating conditions.

Through the invention, a unification of hardware resources and software architectures within an entire vehicle can be achieved, which facilitates a decoupling of software module to improve development efficiency and reduce maintenance costs. That is, when adaptations of different vehicle models and different sensors are implemented based on service interfaces, an architecture based on SOA can be guaranteed to remain unchanged as a whole to reduce a frequency of secondary development. For adaption of domain controllers with different computing powers/architectures or updating and iterating algorithms, implementation methods in a module in corresponding layer service are only required to be replaced, while other modules do not need to be changed, so that an optimal perception effect can be achieved without making major changes to an overall architecture.

In some embodiments, as shown in FIGs. 2, 3, 4 and 7, the sensor layer service 10 may include a hard switch data transfer module 11, a chassis data transfer module 12, a camera data transfer module 13, a radar data transfer module 14 and an inertial sensor data transfer module 15. The hard switch data transfer module 11 is configured to deserialize a raw data output by a hard switch into a SOA gateway data to obtain the SOA gateway data of the hard switch, and send the SOA gateway data of the hard switch to the control layer service 20. The chassis data transfer module 12 is configured to deserialize a raw data output by a chassis into a SOA gateway data to obtain the SOA gateway data of the chassis, and send the SOA gateway data of the chassis to the control layer service 20. The camera data transfer module 13 is configured to deserialize a raw data output by a camera into a SOA gateway data to obtain the SOA gateway data of the camera, and send the SOA gateway data of the camera to the control layer service 20. The radar data transfer module 14 is configured to deserialize a raw data output by a radar into a SOA gateway data to obtain the SOA gateway data of the radar, and send the SOA gateway data of the radar to the control layer service 20. The inertial sensor data transfer module 15 is configured to deserialize a raw data output by an inertial sensor into a SOA gateway data to obtain the SOA gateway data of the inertial sensor, and send the SOA gateway data of the inertial sensor to the control layer service 20.

In some embodiments, the radar data transfer module 14 may include a lidar data transfer submodule 141, a millimeter wave radar data transfer submodule 142 and an ultrasonic radar data transfer submodule 143.

In some embodiments, the control layer service 20 may include a first hard switch data transmission module 21, a chassis data processing module 22, a camera data processing module 23, a radar data processing module 24 and an inertial sensor data processing module 25. The first hard switch data transmission module 21 is configured to transmit a SOA gateway data of a hard switch sent by the hard switch data transfer module 11 to the coordination layer service 30. The chassis data processing module 22 is configured to obtain a vehicle operation control data based on the SOA gateway data of the chassis sent by the chassis data transfer module 12, and send the vehicle operation control data to the coordination layer service 30, and receive operating conditions sent by the coordination layer service 30, and control the vehicle based on the operating conditions. The camera data processing module 23 is configured to obtain a camera sensor state data, a first obstacle attribute data and an image point cloud data based on the SOA gateway data of the camera sent by the camera data transfer module 13, and send the camera sensor state data, the first obstacle attribute data and the image point cloud data to the coordination layer service 30. The radar data processing module 24 is configured to obtain a radar sensor state data, a second obstacle attribute data and a radar point cloud data based on the SOA gateway data of the radar sent by the radar data transfer module 14, and send the radar sensor state data, the second obstacle attribute data and the radar point cloud data to the coordination layer service 30. The inertial sensor data processing module 25 is configured to obtain an inertial sensor state data based on the SOA gateway data of the inertial sensor sent by the inertial sensor data transfer module 15, and send the SOA gateway data of the inertial sensor and the inertial sensor state data to the coordination layer service 30.

In some embodiments, the coordination layer service 30 includes a second hard switch data transmission module 31, a positioning module 32, an integration module 33, a regulation and control module 34, a prediction module 35, a state monitoring module 36 and a vehicle body domain module 37. The second hard switch data transmission module 31 is configured to transmit a SOA gateway data of a hard switch sent by a first hard switch data transmission module 21 to the management layer service 40. The positioning module 32 is configured to determine a positioning information of vehicle based on an image point cloud data sent by a camera data processing module 23, a radar point cloud data sent by a radar data processing module 24, a SOA gateway data of an inertial sensor sent by an inertial sensor data processing module 25 and a map request data sent by an external domain controller, and send the positioning information of vehicle to the integration module 33. The integration module 33 is configured to determine an obstacle state information based on a first obstacle attribute data sent by the camera data processing module 23, a second obstacle attribute data sent by the radar data processing module 24 and the positioning information of vehicle sent by the positioning module 32, and send the obstacle state information to the prediction module 35. The regulation and control module 34 is configured to receive a vehicle operation control data sent by a chassis data processing module 22, and determine a self vehicle movement trajectory according to the vehicle operation control data, and send the self vehicle movement trajectory to the prediction module 35, and send operating conditions sent by the management layer service 40 to the chassis data processing module 22. The prediction module 35 is configured to calculate a time-to-collision of obstacle based on the self vehicle movement trajectory and the obstacle state information which is sent by the integration module 33, and send the time-to-collision of obstacle and obstacle state information to the management layer service 40. The state monitoring module 36 is configured to send a camera sensor state data sent by the camera data processing module 23, a radar sensor state data sent by the radar data processing module 24 and an inertial sensor state data sent by the inertial sensor data processing module 25 to the management layer service 40. The vehicle body domain module 37 is configured to send a control request data sent by the external domain controller to the management layer service 40, and send an external domain control data sent by the management layer service 40 to the external domain controller, so that the external domain controller can control an external domain of vehicle based on the external domain control data.

In some embodiments, the management layer service 40 includes a diagnosis module 41, a management module 42, a drive module 43, a parking module 44 and an arbitration module 45. The diagnosis module 41 is configured to summarize a camera sensor state data, a radar sensor state data and an inertial sensor state data sent by a state monitoring module 36 to obtain a sensor-state summary result, and send the sensor-state summary result to the management module 42. The management module 42 is configured to obtain a judgment result on whether to turn on an intelligent drive function based on the SOA gateway data of the hard switch sent by the second hard switch data transmission module 31 and the sensor-state summary result, and send the judgment result to the drive module 43 and the parking module 44. The drive module 43 is configured to decide a drive condition based on the judgment result, the time-to-collision of obstacle and obstacle state information which are sent by the prediction module 35, and the control request data of the external domain controller sent by the vehicle body domain module 37, and send the drive condition to the arbitration module 45. The parking module 44 is configured to decide a parking condition based on the judgment result, the time-to-collision of obstacle and obstacle state information sent by the prediction module 35, and the control request data of the external domain controller sent by the vehicle body domain module 37, and send the parking condition to the arbitration module 45. The arbitration module 45 is configured to arbitrate and obtain the operating conditions of a vehicle based on the drive condition and the parking condition, and send the operating conditions to the regulation and control module 34.

In some embodiments, the coordination layer service 30 also includes a data upload module 38. The data upload module 38 is configured to receive the time-to-collision of obstacle and the obstacle state information sent by the prediction module 35, and forward the time-to-collision of obstacle and obstacle state information to the external domain controller, so that the external domain controller can draw an obstacle map based on received time-to-collision of obstacle and obstacle state information.

It should be noted that those skilled in the relevant field can clearly understand that, for convenience and conciseness of description, a specific working process of each step in the method described above can refer to corresponding process in the embodiments of the above intelligent drive system based on the SOA architecture, and will not be repeated here.

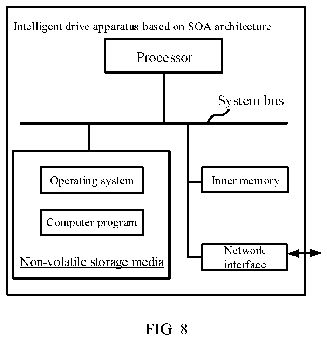

The intelligent drive system based on the SOA architecture provided in the above embodiment may be implemented in a form of a computer program, and the computer program may be run on an intelligent drive apparatus based on the SOA architecture as shown in FIG. 8.

An intelligent drive apparatus based on a SOA architecture is also provided according to an embodiment of the invention, and includes: a memory, a processor and a network interface which are connected via a system bus. At least one instruction is stored in the memory, and the at least one instruction is loaded and executed by the processor to implement all or some steps of the above intelligent drive method based on the SOA architecture.

In some embodiments, the network interface is used for network communication, such as sending assigned tasks. Those skilled in the art will understand that a structure shown in FIG. 8 is merely a block diagram of a partial structure related to a scheme of the invention, and does not constitute a limitation on the computer apparatus to which the scheme of the invention is applied. A specific computer apparatus may include more or fewer components than those shown in the accompany drawings, or combine certain components, or have a different arrangement of components.

The processor may be a CPU, or other general-purpose processors, digital signal processor (DSP), application specific integrated circuits (ASIC), field programmable gate array (FPGA) or other programmable logic devices, discrete gates or transistor logic devices, and discrete hardware components and the like. A general-purpose processor may be a microprocessor, or may be any conventional processor and the like. The processor is a control center of a computer device, and uses various interfaces and lines to connect various parts of entire computer device.

The memory may be configured to store computer programs and/or modules. The processor implements various functions of the computer device by running or executing the computer programs and/or modules stored in the memory and calling data stored in the memory. The memory may mainly include a program storage area and a data storage area. The program storage area may store an operating system, an application required for at least one function (such as a video playback function, an image playback function, etc.) and the like. The data storage area may store data (such as video data, image data, etc.) and the like created according to a use condition of mobile phone. **In** addition, the memory may include a High Speed Random Access Memory and may also include a non-volatile memory, such as a hard disk, a memory, a plug-in hard disk, a smart media card (SMC), a secure digital (SD) card, a flash card (Flash Card), at least one disk storage device, a flash memory device or other volatile solid-state storage device.

The embodiment of the invention also provides a computer-readable storage medium on which a computer program is stored. Upon the computer program is executed by a processor, all or some steps of the above intelligent drive method based on the SOA architecture are implemented.

The advantageous effects brought about by technical solutions provided by the invention include: an adaptation efficiency between the intelligent drive system and different vehicle models are effectively improved and a secondary development cost is reduced.

Through the invention, a unification of hardware resources and software architectures within an entire vehicle can be achieved, which facilitates a decoupling of software module to improve development efficiency and reduce maintenance costs. That is, when adaptations of different vehicle models and different sensors are implemented based on service interfaces, an architecture based on SOA can be guaranteed to remain unchanged as a whole to reduce a frequency of secondary development. For adaption of domain controllers with different computing powers/architectures or updating and iterating algorithms, implementation methods in a module in corresponding layer service are only required to be replaced, while other modules do not need to be changed, so that an optimal perception effect can be achieved without making major changes to an overall architecture.

All or some aforementioned processes can be implemented according to an embodiment of the invention, and may also be completed by instructing related hardware through a computer program. The computer program may be stored in a computer-readable storage medium, and when the computer program is executed by a processor, steps of the above various methods may be implemented. The computer program includes computer program code, which may be in source code form, object code form, executable file or some intermediate form. A computer-readable media may include: any entity or device that can carry computer program code, recording media, USB flash disks, mobile hard disks, magnetic disks, optical disks, computer memory, read-only memory (ROM), random access memory (RAM), electrical carrier signals, telecommunication signals, and software distribution media, etc. It should be noted that a content contained in the computer-readable medium can be appropriately increased or decreased according to requirements of legislation and patent practice in the jurisdiction. For example, in some jurisdictions, according to legislation and patent practice, computer-readable media does not include electrical carrier signals and telecommunications signals.

Those skilled in the art should understand that the embodiments of the invention may be provided as methods, systems, or computer program products. Accordingly, the present invention can take the form of an entire hardware embodiment, an entire software embodiment, or an embodiment combining software and hardware aspects. Furthermore, the present invention may take the form of a computer program product embodied on one or more computer-usable storage medias (including, but not limited to, disk storage, optical storage, etc.) having a computer-usable program code embodied therein.

It should be noted that, as used herein, the term "include", "comprise" or any other variation thereof are intended to cover a non-exclusive inclusion such that a process, method, article or system including a set of elements includes not only those elements, but also includes other elements not expressly listed, or elements inherent in the process, method, article, or system. Without further limitation, the element limited by the statement "includes a ......" does not preclude the presence of other identical elements in the process, method, article, or system including that element.

The invention is described with reference to flowcharts and/or block diagrams of methods, apparatus (systems) and computer program products according to embodiments of the invention. It will be understood that each process and/or block in the flowchart and/or block diagrams, and combinations of processes and/or blocks in the flowchart and/or block diagrams, can be implemented by computer program instructions. These computer program instructions may be provided to a processor of a general purpose computer, special purpose computer, embedded processor, or other programmable data processing apparatus to produce a device, such that the device produced by the instructions executed by a processor of the computer or other programmable data processing apparatus can implement the functions specified in a process or processes in a flowchart and/or in a block or blocks in a block diagram.

The above description is embodiments of the invention, so that those skilled in the art can understand or implement the invention. Various modifications to these embodiments will be readily obvious to those skilled in the art, and the generic principles defined herein may be implemented in other embodiments without departing from the scope of the invention as defined by the appended claims.

## Claims

1. An intelligent drive system based on a SOA architecture, comprising: a sensor layer service (10), a control layer service (20), a coordination layer service (30) and a management layer service (40),
wherein the sensor layer service, the control layer service, the coordination layer service and the management layer service are constructed based on the SOA architecture, and are independent from one another and perform a data communication through a service interface;
the sensor layer service is configured to be connected with various sensors based on the service interface and deserialize (S10) a raw data output by various sensors into a SOA gateway data;
the control layer service is configured to process (S20) the SOA gateway data to obtain a basic control data, wherein the basic control data comprises a vehicle operation control data, a sensor state data, an obstacle attribute data and a point cloud data;
the coordination layer service is configured to receive (S30) a control request data sent by an external domain controller, and determine a vehicle auxiliary information according to the basic control data, wherein the vehicle auxiliary information comprises an obstacle state information, a time-to-collision of obstacle and a positioning information of vehicle;
the management layer service is configured to arbitrate (S40) and obtain operating conditions of a vehicle according to the control request data, the basic control data and the vehicle auxiliary information, and send the operating conditions to the control layer service through the coordination layer service; and
the control layer service is also configured to control (S50) the vehicle based on the operating conditions.

2. The intelligent drive system based on the SOA architecture according to claim 1, wherein the sensor layer service comprises a hard switch data transfer module, a chassis data transfer module, a camera data transfer module, a radar data transfer module and an inertial sensor data transfer module;
the hard switch data transfer module is configured to deserialize a raw data output by a hard switch into a SOA gateway data to obtain the SOA gateway data of the hard switch, and send the SOA gateway data of the hard switch to the control layer service;
the chassis data transfer module is configured to deserialize a raw data output by a chassis into a SOA gateway data to obtain the SOA gateway data of the chassis, and send the SOA gateway data of the chassis to the control layer service;
the camera data transfer module is configured to deserialize a raw data output by a camera into a SOA gateway data to obtain the SOA gateway data of the camera, and send the SOA gateway data of the camera to the control layer service;
the radar data transfer module is configured to deserialize a raw data output by a radar into a SOA gateway data to obtain the SOA gateway data of the radar, and send the SOA gateway data of the radar to the control layer service; and
the inertial sensor data transfer module is configured to deserialize a raw data output by an inertial sensor into a SOA gateway data to obtain the SOA gateway data of the inertial sensor, and send the SOA gateway data of the inertial sensor to the control layer service.

3. The intelligent drive system based on the SOA architecture according to claim 2, wherein the radar data transfer module comprises a lidar data transfer submodule, a millimeter wave radar data transfer submodule and an ultrasonic radar data transfer submodule.

4. The intelligent drive system based on the SOA architecture according to claim 2, wherein the control layer service comprises a first hard switch data transmission module, a chassis data processing module, a camera data processing module, a radar data processing module and an inertial sensor data processing module.
the first hard switch data transmission module is configured to transmit the SOA gateway data of the hard switch to the coordination layer service;
the chassis data processing module is configured to obtain the vehicle operation control data based on the SOA gateway data of the chassis and send the vehicle operation control data to the coordination layer service, and receive the operating conditions sent by the coordination layer service, and control the vehicle based on the operating conditions;
the camera data processing module is configured to obtain a camera sensor state data, a first obstacle attribute data and an image point cloud data based on the SOA gateway data of the camera, and send the camera sensor state data, the first obstacle attribute data and the image point cloud data to the coordination layer service;
the radar data processing module is configured to obtain a radar sensor state data, a second obstacle attribute data and an image point cloud data based on the SOA gateway data of the radar, and send the radar sensor state data, the second obstacle attribute data and the image point cloud data to the coordination layer service; and
the inertial sensor data processing module is configured to obtain an inertial sensor state data based on the SOA gateway data of the inertial sensor, and send the SOA gateway data of the inertial sensor and the inertial sensor state data to the coordination layer service.

5. The intelligent drive system based on the SOA architecture according to claim 4, wherein the coordination layer service comprises a second hard switch data transmission module, a positioning module, an integration module, a regulation and control module, a prediction module, a state monitoring module and a vehicle body domain module;
the second hard switch data transmission module is configured to transmit the SOA gateway data of the hard switch to the management layer service;
the positioning module is configured to determine the positioning information of vehicle based on the image point cloud data, the radar point cloud data, the SOA gateway data of the inertial sensor and a map request data sent by the external domain controller, and send the positioning information of vehicle to the integration module;
the integration module is configured to determine the obstacle state information based on the first obstacle attribute data, the second obstacle attribute data and the positioning information of vehicle, and send the obstacle state information to the prediction module;
the regulation and control module is configured to determine a self vehicle movement trajectory according to the vehicle operation control data, and send the self vehicle movement trajectory to the prediction module, and send the operating conditions to the chassis data processing module;
the prediction module is configured to calculate the time-to-collision of obstacle based on the self vehicle movement trajectory and the obstacle state information, and send the time-to-collision of obstacle and the obstacle state information to the management layer service;
the state monitoring module is configured to send the camera sensor state data, the radar sensor state data and the inertial sensor state data to the management layer service; and
the vehicle body domain module is configured to send the control request data to the management layer service, and send an external domain control data sent by the management layer service to the external domain controller for the external domain controller to control an external domain of vehicle based on the external domain control data.

6. The intelligent drive system based on the SOA architecture according to claim 5, wherein the management layer service comprises a diagnosis module, a management module, a drive module, a parking module and an arbitration module;
the diagnostic module is configured to summarize the camera sensor state data, the radar sensor state data and the inertial sensor state data to obtain a sensor-state summary result, and send the sensor-state summary result to the management module;
the management module is configured to judge whether to turn on an intelligent drive function based on the SOA gateway data of the hard switch and the sensor-state summary result, to obtain a judgement result and send the judgment result to the drive module and the parking module;
the drive module is configured to determine a drive condition based on the judgment result, the time-to-collision of obstacle, the obstacle state information and the control request data, and send the drive condition to the arbitration module;
the parking module is configured to determine a parking condition based on the judgment result, the time-to-collision of obstacle, the obstacle state information and the control request data, and send the parking condition to the arbitration module; and
the arbitration module is configured to arbitrate and obtain the operating conditions of the vehicle based on the drive condition and the parking condition, and send the operating conditions to the regulation and control module.

7. The intelligent drive system based on the SOA architecture according to claim 5, wherein the coordination layer service also comprises a data upload module which is configured to receive the time-to-collision of obstacle and the obstacle state information sent by the prediction module, and forward the time-to-collision of obstacle and obstacle state information to the external domain controller for the external domain controller to draw an obstacle map based on a received time-to-collision of obstacle and obstacle state information.

8. An intelligent drive method based on a SOA architecture, applied to the intelligent drive system based on the SOA architecture according to any one of claims 1 to 7, the intelligent drive method comprising:
deserializing, by a sensor layer service, a raw data output by various sensors into a SOA gateway data and send the SOA gateway data to a control layer service (S10);
processing, by the control layer service, the SOA gateway data to obtain a basic control data, and sending, by the control layer service, the basic control data to a coordination layer service, wherein the basic control data comprises a vehicle operation control data, a sensor state data, an obstacle attribute data and a point cloud data (S20);
receiving, by the coordination layer service, a control request data sent by an external domain controller, and determining, by the coordination layer service, a vehicle auxiliary information based on the basic control data, and sending, by the coordination layer service, the basic control data, the vehicle auxiliary information and the control request data to a management layer service, the vehicle auxiliary information comprising an obstacle state information, a time-to-collision of obstacle and a positioning information of vehicle (S30);
arbitrating, by the management layer service, operating conditions of a vehicle based on the basic control data, the vehicle auxiliary information and the control request data, and sending, by the management layer service, the operating conditions to the control layer service through the coordination layer service (S40); and
controlling, by the control layer service, the vehicle based on the operating conditions (S50).

9. An intelligent drive apparatus based on a SOA architecture, comprising: a memory and a processor, wherein the memory stores at least one instruction which is loaded and executed by the processor to implement the intelligent drive method based on the SOA architecture according to claim 8.

10. A computer-readable storage medium storing a computer program, wherein upon the computer program is executed by a processor, the intelligent drive method based on the SOA architecture according to claim 8 is implemented.

## Patentansprüche

1. Intelligentes Antriebssystem auf Basis einer SOA-Architektur, umfassend:
einen Sensorschichtdienst (10), einen Steuerschichtdienst (20), einen Koordinationsschichtdienst (30) und einen Verwaltungsschichtdienst (40), wobei der Sensorschichtdienst, der Steuerschichtdienst, der Koordinationsschichtdienst und der Verwaltungsschichtdienst auf Basis der SOA-Architektur aufgebaut sind, voneinander unabhängig sind und über eine Dienstschnittstelle eine Datenkommunikation durchführen;
wobei der Sensorschichtdienst dazu eingerichtet ist, über die Dienstschnittstelle mit verschiedenen Sensoren verbunden zu werden und von verschiedenen Sensoren ausgegebene Rohdaten in SOA-Gateway-Daten zu deserialisieren (S10);
wobei der Steuerschichtdienst dazu eingerichtet ist, die SOA-Gateway-Daten zu verarbeiten (S20), um Basissteuerdaten zu erhalten, wobei die Basissteuerdaten Fahrzeugbetriebssteuerdaten, Sensorzustandsdaten, Hindernisattributdaten und Punktwolkendaten umfassen;
wobei der Koordinationsschichtdienst dazu eingerichtet ist, von einem externen Domänencontroller gesendete Steueranforderungsdaten zu empfangen (S30) und anhand der Basissteuerdaten Fahrzeugzusatzinformationen zu bestimmen, wobei die Fahrzeugzusatzinformationen Hinderniszustandsinformationen, eine Zeit bis zu einer Kollision mit einem Hindernis und Fahrzeuglokalisierungsinformationen umfassen;
wobei der Verwaltungsschichtdienst dazu eingerichtet ist, anhand der Steueranforderungsdaten, der Basissteuerdaten und der Fahrzeugzusatzinformationen Betriebszustände eines Fahrzeugs durch Arbitrierung zu ermitteln (S40) und die Betriebszustände über den Koordinationsschichtdienst an den Steuerschichtdienst zu senden; und
wobei der Steuerschichtdienst ferner dazu eingerichtet ist, das Fahrzeug auf Basis der Betriebszustände zu steuern (S50).

2. Intelligentes Antriebssystem auf Basis der SOA-Architektur nach Anspruch 1, wobei der Sensorschichtdienst ein Hardwareschalter-Datenübertragungsmodul, ein Fahrwerk-Datenübertragungsmodul, ein Kamera-Datenübertragungsmodul, ein Radar-Datenübertragungsmodul und ein Inertialsensor-Datenübertragungsmodul umfasst;
wobei das Hardwareschalter-Datenübertragungsmodul dazu eingerichtet ist, von einem Hardwareschalter ausgegebene Rohdaten in SOA-Gateway-Daten zu deserialisieren, um die SOA-Gateway-Daten des Hardwareschalters zu erhalten, und die SOA-Gateway-Daten des Hardwareschalters an den Steuerschichtdienst zu senden;
wobei das Fahrwerk-Datenübertragungsmodul dazu eingerichtet ist, von einem Fahrwerk ausgegebene Rohdaten in SOA-Gateway-Daten zu deserialisieren, um die SOA-Gateway-Daten des Fahrwerks zu erhalten, und die SOA-Gateway-Daten des Fahrwerks an den Steuerschichtdienst zu senden;
wobei das Kamera-Datenübertragungsmodul dazu eingerichtet ist, von einer Kamera ausgegebene Rohdaten in SOA-Gateway-Daten zu deserialisieren, um die SOA-Gateway-Daten der Kamera zu erhalten, und die SOA-Gateway-Daten der Kamera an den Steuerschichtdienst zu senden;
wobei das Radar-Datenübertragungsmodul dazu eingerichtet ist, von einem Radar ausgegebene Rohdaten in SOA-Gateway-Daten zu deserialisieren, um die SOA-Gateway-Daten des Radars zu erhalten, und die SOA-Gateway-Daten des Radars an den Steuerschichtdienst zu senden; und
wobei das Inertialsensor-Datenübertragungsmodul dazu eingerichtet ist, von einem Inertialsensor ausgegebene Rohdaten in SOA-Gateway-Daten zu deserialisieren, um die SOA-Gateway-Daten des Inertialsensors zu erhalten, und die SOA-Gateway-Daten des Inertialsensors an den Steuerschichtdienst zu senden.

3. Intelligentes Antriebssystem auf Basis der SOA-Architektur nach Anspruch 2, wobei das Radar-Datenübertragungsmodul ein Lidar-Datenübertragungsuntermodul, ein Millimeterwellenradar-Datenübertragungsuntermodul und ein Ultraschallradar-Datenübertragungsuntermodul umfasst.

4. Intelligentes Antriebssystem auf Basis der SOA-Architektur nach Anspruch 2, wobei der Steuerschichtdienst ein erstes Hardwareschalter-Datenweiterleitungsmodul, ein Fahrwerk-Datenverarbeitungsmodul, ein Kamera-Datenverarbeitungsmodul, ein Radar-Datenverarbeitungsmodul und ein Inertialsensor-Datenverarbeitungsmodul umfasst;
wobei das erste Hardwareschalter-Datenweiterleitungsmodul dazu eingerichtet ist, die SOA-Gateway-Daten des Hardwareschalters an den Koordinationsschichtdienst weiterzuleiten;
wobei das Fahrwerk-Datenverarbeitungsmodul dazu eingerichtet ist, auf Basis der SOA-Gateway-Daten des Fahrwerks die Fahrzeugbetriebssteuerdaten zu ermitteln und die Fahrzeugbetriebssteuerdaten an den Koordinationsschichtdienst zu senden sowie die von dem Koordinationsschichtdienst gesendeten Betriebszustände zu empfangen und das Fahrzeug auf Basis der Betriebszustände zu steuern;
wobei das Kamera-Datenverarbeitungsmodul dazu eingerichtet ist, auf Basis der SOA-Gateway-Daten der Kamera Kamerasensorzustandsdaten, erste Hindernisattributdaten und Bildpunktwolkendaten zu ermitteln und die Kamerasensorzustandsdaten, die ersten Hindernisattributdaten und die Bildpunktwolkendaten an den Koordinationsschichtdienst zu senden;
wobei das Radar-Datenverarbeitungsmodul dazu eingerichtet ist, auf Basis der SOA-Gateway-Daten des Radars Radarsensorzustandsdaten, zweite Hindernisattributdaten und Bildpunktwolkendaten zu ermitteln und die Radarsensorzustandsdaten, die zweiten Hindernisattributdaten und die Bildpunktwolkendaten an den Koordinationsschichtdienst zu senden; und
wobei das Inertialsensor-Datenverarbeitungsmodul dazu eingerichtet ist, auf Basis der SOA-Gateway-Daten des Inertialsensors Inertialsensorzustandsdaten zu ermitteln und die SOA-Gateway-Daten des Inertialsensors und die Inertialsensorzustandsdaten an den Koordinationsschichtdienst zu senden.

5. Intelligentes Antriebssystem auf Basis der SOA-Architektur nach Anspruch 4, wobei der Koordinationsschichtdienst ein zweites Hardwareschalter-Datenweiterleitungsmodul, ein Lokalisierungsmodul, ein Fusionsmodul, ein Regelungs- und Steuermodul, ein Vorhersagemodul, ein Zustandsüberwachungsmodul und ein Karosseriedomänenmodul umfasst;
wobei das zweite Hardwareschalter-Datenweiterleitungsmodul dazu eingerichtet ist, die SOA-Gateway-Daten des Hardwareschalters an den Verwaltungsschichtdienst weiterzuleiten;
wobei das Lokalisierungsmodul dazu eingerichtet ist, auf Basis der Bildpunktwolkendaten, der Radarpunktwolkendaten, der SOA-Gateway-Daten des Inertialsensors und von dem externen Domänencontroller gesendeter Kartenanforderungsdaten die Fahrzeuglokalisierungsinformationen zu bestimmen und die Fahrzeuglokalisierungsinformationen an das Fusionsmodul zu senden;
wobei das Fusionsmodul dazu eingerichtet ist, auf Basis der ersten Hindernisattributdaten, der zweiten Hindernisattributdaten und der Fahrzeuglokalisierungsinformationen die Hinderniszustandsinformationen zu bestimmen und die Hinderniszustandsinformationen an das Vorhersagemodul zu senden;
wobei das Regelungs- und Steuermodul dazu eingerichtet ist, anhand der Fahrzeugbetriebssteuerdaten eine Bewegungstrajektorie des eigenen Fahrzeugs zu bestimmen und die Bewegungstrajektorie des eigenen Fahrzeugs an das Vorhersagemodul zu senden sowie die Betriebszustände an das Fahrwerk-Datenverarbeitungsmodul zu senden;
wobei das Vorhersagemodul dazu eingerichtet ist, auf Basis der Bewegungstrajektorie des eigenen Fahrzeugs und der Hinderniszustandsinformationen die Zeit bis zu einer Kollision mit einem Hindernis zu berechnen und die Zeit bis zu einer Kollision mit einem Hindernis und die Hinderniszustandsinformationen an den Verwaltungsschichtdienst zu senden;
wobei das Zustandsüberwachungsmodul dazu eingerichtet ist, die Kamerasensorzustandsdaten, die Radarsensorzustandsdaten und die Inertialsensorzustandsdaten an den Verwaltungsschichtdienst zu senden; und
wobei das Karosseriedomänenmodul dazu eingerichtet ist, die Steueranforderungsdaten an den Verwaltungsschichtdienst zu senden und von dem Verwaltungsschichtdienst gesendete Steuerdaten für eine externe Domäne an den externen Domänencontroller zu senden, damit der externe Domänencontroller auf Basis der Steuerdaten für die externe Domäne eine externe Domäne des Fahrzeugs steuert.

6. Intelligentes Antriebssystem auf Basis der SOA-Architektur nach Anspruch 5, wobei der Verwaltungsschichtdienst ein Diagnosemodul, ein Verwaltungsmodul, ein Fahrmodul, ein Parkmodul und ein Arbitrierungsmodul umfasst;
wobei das Diagnosemodul dazu eingerichtet ist, die Kamerasensorzustandsdaten, die Radarsensorzustandsdaten und die Inertialsensorzustandsdaten zusammenzufassen, um ein Ergebnis der Sensorzustandszusammenfassung zu erhalten, und das Ergebnis der Sensorzustandszusammenfassung an das Verwaltungsmodul zu senden;
wobei das Verwaltungsmodul dazu eingerichtet ist, auf Basis der SOA-Gateway-Daten des Hardwareschalters und des Ergebnisses der Sensorzustandszusammenfassung zu beurteilen, ob eine intelligente Fahrfunktion zu aktivieren ist, um ein Beurteilungsergebnis zu erhalten, und das Beurteilungsergebnis an das Fahrmodul und das Parkmodul zu senden;
wobei das Fahrmodul dazu eingerichtet ist, auf Basis des Beurteilungsergebnisses, der Zeit bis zu einer Kollision mit einem Hindernis, der Hinderniszustandsinformationen und der Steueranforderungsdaten einen Fahrzustand zu bestimmen und den Fahrzustand an das Arbitrierungsmodul zu senden;
wobei das Parkmodul dazu eingerichtet ist, auf Basis des Beurteilungsergebnisses, der Zeit bis zu einer Kollision mit einem Hindernis, der Hinderniszustandsinformationen und der Steueranforderungsdaten einen Parkzustand zu bestimmen und den Parkzustand an das Arbitrierungsmodul zu senden; und
wobei das Arbitrierungsmodul dazu eingerichtet ist, auf Basis des Fahrzustands und des Parkzustands die Betriebszustände des Fahrzeugs durch Arbitrierung zu ermitteln und die Betriebszustände an das Regelungs- und Steuermodul zu senden.

7. Intelligentes Antriebssystem auf Basis der SOA-Architektur nach Anspruch 5, wobei der Koordinationsschichtdienst ferner ein Daten-Upload-Modul umfasst, das dazu eingerichtet ist, die von dem Vorhersagemodul gesendete Zeit bis zu einer Kollision mit einem Hindernis und die von dem Vorhersagemodul gesendeten Hinderniszustandsinformationen zu empfangen und die Zeit bis zu einer Kollision mit einem Hindernis und die Hinderniszustandsinformationen an den externen Domänencontroller weiterzuleiten, damit der externe Domänencontroller auf Basis der empfangenen Zeit bis zu einer Kollision mit einem Hindernis und der empfangenen Hinderniszustandsinformationen eine Hinderniskarte zeichnet.

8. Intelligentes Antriebsverfahren auf Basis einer SOA-Architektur, das auf das intelligente Antriebssystem auf Basis der SOA-Architektur nach einem der Ansprüche 1 bis 7 angewendet wird, wobei das intelligente Antriebsverfahren Folgendes umfasst:
Deserialisieren von Rohdaten, die von verschiedenen Sensoren ausgegeben werden, in SOA-Gateway-Daten durch einen Sensorschichtdienst und Senden der SOA-Gateway-Daten an einen Steuerschichtdienst (S10);
Verarbeiten der SOA-Gateway-Daten durch den Steuerschichtdienst, um Basissteuerdaten zu erhalten, und Senden der Basissteuerdaten durch den Steuerschichtdienst an einen Koordinationsschichtdienst, wobei die Basissteuerdaten Fahrzeugbetriebssteuerdaten, Sensorzustandsdaten, Hindernisattributdaten und Punktwolkendaten umfassen (S20);
Empfangen von Steueranforderungsdaten, die von einem externen Domänencontroller gesendet werden, durch den Koordinationsschichtdienst und Bestimmen von Fahrzeugzusatzinformationen auf Basis der Basissteuerdaten durch den Koordinationsschichtdienst sowie Senden der Basissteuerdaten, der Fahrzeugzusatzinformationen und der Steueranforderungsdaten durch den Koordinationsschichtdienst an einen Verwaltungsschichtdienst, wobei die Fahrzeugzusatzinformationen Hinderniszustandsinformationen, eine Zeit bis zu einer Kollision mit einem Hindernis und Fahrzeuglokalisierungsinformationen umfassen (S30);
Ermitteln von Betriebszuständen eines Fahrzeugs durch den Verwaltungsschichtdienst mittels Arbitrierung auf Basis der Basissteuerdaten, der Fahrzeugzusatzinformationen und der Steueranforderungsdaten sowie Senden der Betriebszustände durch den Verwaltungsschichtdienst über den Koordinationsschichtdienst an den Steuerschichtdienst (S40); und
Steuern des Fahrzeugs durch den Steuerschichtdienst auf Basis der Betriebszustände (S50).

9. Intelligente Antriebsvorrichtung auf Basis einer SOA-Architektur, umfassend:
einen Speicher und einen Prozessor, wobei der Speicher mindestens eine Anweisung speichert, die von dem Prozessor geladen und ausgeführt wird, um das intelligente Antriebsverfahren auf Basis der SOA-Architektur nach Anspruch 8 zu implementieren.

10. Computerlesbares Speichermedium, auf dem ein Computerprogramm gespeichert ist, wobei bei Ausführung des Computerprogramms durch einen Prozessor das intelligente Antriebsverfahren auf Basis der SOA-Architektur nach Anspruch 8 implementiert wird.

## Revendications

1. Un système de conduite intelligente basé sur une architecture SOA, comprenant : un service de couche de capteurs (10), un service de couche de commande (20), un service de couche de coordination (30) et un service de couche de gestion (40),
dans lequel le service de couche de capteur, le service de couche de commande, le service de couche de coordination et le service de couche de gestion sont construits selon l'architecture SOA, sont indépendants les uns des autres et effectuent une communication de données via une interface de service ;
le service de la couche de capteurs est configuré pour être connecté à divers capteurs basés sur l'interface de service et désérialiser (S10)
une donnée brute émise par divers capteurs dans une donnée de passerelle SOA ;
le service de la couche de commande est configuré pour traiter (S20) les données de passerelle SOA pour obtenir des données de commande de base, dans lequel les données de commande de base comprennent des données de commande de fonctionnement du véhicule, une donnée d'état du capteur, une donnée d'attribut d'obstacle et une donnée de nuage de points ;
le service de la couche de coordination est configuré pour recevoir (S30) une demande de données de commande envoyées par un contrôleur de domaine externe, et déterminer une information auxiliaire du véhicule selon les données de commande de base, dans lequel les informations auxiliaires du véhicule comprennent une information sur l'état de l'obstacle, un temps jusqu'à la collision avec l'obstacle et une information de positionnement du véhicule ;
le service de la couche de gestion est configuré pour arbitrer (S40) et obtenir les conditions de fonctionnement d'un véhicule selon les données de demande de commande, les données de commande de base et les informations auxiliaires du véhicule, et envoyer les conditions de fonctionnement au service de la couche de commande via le service de la couche de coordination ; et
le service de la couche de commande est également configuré pour commander (S50) le véhicule selon les conditions de fonctionnement.

2. Le système de conduite intelligente basé sur l'architecture SOA selon la revendication 1, dans lequel le service de couche de capteurs comprend un module de transfert de données à commutateur dur, un module de transfert de données de châssis, un module de transfert de données de caméra, un module de transfert de données de radar et un module de transfert de données de capteurs inertiels ;
le module de transfert de données du commutateur dur est configuré pour désérialiser des données brutes produites par un commutateur dur en données de passerelle SOA afin d'obtenir les données de passerelle SOA du commutateur dur, et d'envoyer les données de passerelle SOA du commutateur dur au service de la couche de commande ;
le module de transfert de données du châssis est configuré pour désérialiser des données brutes produites par un châssis en données de passerelle SOA afin d'obtenir des données de passerelle SOA du châssis, et d'envoyer les données de passerelle SOA du châssis au service de la couche de commande ;
le module de transfert de données de la caméra est configuré pour désérialiser des données brutes produites par une caméra en données de passerelle SOA afin d'obtenir les données de passerelle SOA de la caméra, et d'envoyer les données de passerelle SOA de la caméra au service de la couche de commande ;
le module de transfert de données de radar est configuré pour désérialiser des données brutes produites par un radar en données de passerelle SOA afin d'obtenir les données de passerelle SOA du radar, et d'envoyer les données de passerelle SOA du radar au service de la couche de commande ; et
le module de transfert de données du capteur inertiel est configuré pour désérialiser des données brutes produites par un capteur inertiel en données de passerelle SOA afin d'obtenir les données de passerelle SOA du capteur inertiel, et d'envoyer les données de passerelle SOA du capteur inertiel au service de la couche de commande.

3. Le système de conduite intelligente basé sur l'architecture SOA selon la revendication 2, dans lequel le module de transfert de données de radar comprend un sous-module de transfert de données lidar, un sous-module de transfert de données radar à ondes millimétriques et un sous-module de transfert de données radar à ultrasons.

4. Le système de conduite intelligente basé sur l'architecture SOA selon la revendication 2, dans lequel le service de couche de commande comprend un premier module de transmission de données à commutateur dur, un module de traitement des données de châssis, un module de traitement des données de caméra, un module de traitement des données radar et un module de traitement des données des capteurs inertiels.
Le premier module de transmission de données à commutateur dur est configuré pour transmettre les données de passerelle SOA du commutateur dur vers le service de couche de coordination ;
le module de traitement des données du châssis est configuré pour obtenir les données de commande de fonctionnement du véhicule à partir des données de passerelle SOA du châssis et envoyer les données de commande de fonctionnement du véhicule au service de la couche de coordination, recevoir les conditions de fonctionnement envoyées par le service de la couche de coordination, et commander le véhicule en fonction des conditions de fonctionnement ;
le module de traitement des données de caméra est configuré pour obtenir des données d'état du capteur de caméra, une donnée d'attribut de premier obstacle et une donnée de nuage de points d'image basée sur les données de passerelle SOA de la caméra, et envoyer les données d'état du capteur de caméra, les données d'attribut de premier obstacle et les données du nuage de points d'image au service de couche de coordination ;
le module de traitement des données de radar est configuré pour obtenir des données d'état du capteur radar, une seconde donnée d'attribut obstacle et une donnée de nuage de points d'image basée sur les données de passerelle SOA du radar, et envoyer les données d'état du capteur radar, les données de deuxième attribut obstacle et les données du nuage de points image au service de couche de coordination ; et
le module de traitement des données du capteur inertiel est configuré pour obtenir des données d'état du capteur inertiel basées sur les données de passerelle SOA du capteur inertiel, et pour envoyer les données de passerelle SOA du capteur inertiel ainsi que les données d'état du capteur inertiel au service de la couche de coordination.

5. Le système de conduite intelligente basé sur l'architecture SOA selon la revendication 4, dans lequel le service de la couche de coordination comprend un deuxième module de transmission de données à commutateur dur, un module de positionnement, un module d'intégration, un module de régulation et de contrôle, un module de prédiction, un module de surveillance de l'état et un module de domaine de carrosserie du véhicule ;
le deuxième module de transmission de données du commutateur dur est configuré pour transmettre les données de passerelle SOA du commutateur dur vers le service de la couche de gestion ;
le module de positionnement est configuré pour déterminer les informations de positionnement du véhicule à partir des données du nuage de points d'image, des données du nuage de points radar, des données de passerelle SOA du capteur inertiel et d'une requête cartographique envoyée par le contrôleur de domaine externe, et pour envoyer les informations de positionnement du véhicule au module d'intégration ;
le module d'intégration est configuré pour déterminer l'état de l'obstacle à partir des données du premier attribut d'obstacle, du deuxième attribut obstacle et des informations de positionnement du véhicule, et envoyer les informations sur l'état de l'obstacle au module de prédiction ;
le module de régulation et de contrôle est configuré pour déterminer une trajectoire de mouvement autonome selon les données de commande de fonctionnement du véhicule, envoyer la trajectoire de mouvement autonome au module de prédiction, et envoyer les conditions de fonctionnement au module de traitement des données du châssis ;
le module de prédiction est configuré pour calculer le temps jusqu'à la collision avec l'obstacle en fonction de la trajectoire de mouvement du véhicule autonome et des informations sur l'état de l'obstacle, et pour envoyer le temps jusqu'à la collision avec l'obstacle ainsi que les informations sur l'état de l'obstacle au service de la couche de gestion ;
le module de surveillance de l'état est configuré pour envoyer les données d'état du capteur de la caméra, les données d'état du capteur radar et les données d'état du capteur inertiel au service de la couche de gestion ; et
le module de domaine de la carrosserie du véhicule est configuré pour envoyer les données de demande de commande au service de la couche de gestion, et pour envoyer une donnée de contrôle de domaine externe envoyée par le service de la couche de gestion au contrôleur de domaine externe pour que ce dernier contrôle un domaine externe du véhicule en fonction des données de commande de domaine externe.

6. Le système de conduite intelligente basé sur l'architecture SOA selon la revendication 5, dans lequel le service de la couche de gestion comprend un module de diagnostic, un module de gestion, un module de transmission, un module de stationnement et un module d'arbitrage ;
le module de diagnostic est configuré pour résumer les données d'état du capteur de caméra, les données d'état du capteur radar et les données d'état inertiel afin d'obtenir un résumé de l'état du capteur, et d'envoyer le résumé de l'état du capteur au module de gestion ;
le module de gestion est configuré pour juger s'il faut activer une fonction de conduite intelligente basée sur les données de passerelle SOA du commutateur dur et du résumé de l'état du capteur, obtenir un résultat de jugement et envoyer le résultat du jugement au module de disque et au module de stationnement ;
le module de disque est configuré pour déterminer une condition de disque en fonction du résultat du jugement, du temps avant la collision avec l'obstacle, des informations sur l'état de l'obstacle et des données de demande de commande, et d'envoyer la condition du disque au module d'arbitrage ;
le module de stationnement est configuré pour déterminer une condition de stationnement basée sur le résultat du jugement, le temps avant la collision avec l'obstacle, les informations sur l'état de l'obstacle et les données de demande de commande, et envoie la condition de stationnement au module d'arbitrage ; et
le module d'arbitrage est configuré pour arbitrer et obtenir les conditions de fonctionnement du véhicule en fonction de la condition de conduite et de la condition de stationnement, puis transmettre les conditions de fonctionnement au module de régulation et de contrôle.

7. Le système de conduite intelligente basé sur l'architecture SOA selon la revendication 5, dans lequel le service de la couche de coordination comprend également un module de téléversement de données configuré pour recevoir le temps jusqu'à la collision avec l'obstacle et les informations sur l'état de l'obstacle envoyées par le module de prédiction, et pour transmettre le temps jusqu'à la collision des informations d'obstacle et d'état d'obstacle au contrôleur de domaine externe pour que le contrôleur de domaine externe dessine une carte d'obstacle basée sur le temps reçu jusqu'à la collision des informations d'obstacle et d'état d'obstacle.

8. Un procédé de conduite intelligente basé sur une architecture SOA, appliqué au système de disque intelligent basé sur l'architecture SOA selon l'une des revendications 1 à 7, le procédé de conduite intelligente comprenant :
la désérialisation, par un service de couche de capteur, d'une donnée brute produite par divers capteurs dans une passerelle SOA et l'envoi des données de passerelle SOA à un service de couche de commande (S10) ;
le traitement, par le service de la couche de commande, des données de passerelle SOA pour obtenir une donnée de contrôle de base, et l'envoi, par le service de la couche de commande, des données de commande de base à un service de la couche de coordination, dans lequel les données de commande de base comprennent une donnée de contrôle de fonctionnement du véhicule, une donnée d'état du capteur, une donnée d'attribut obstacle et une donnée de nuage de points (S20) ;
la réception, par le service de la couche de coordination, d'une donnée de demande de commande envoyée par un contrôleur de domaine externe, et la détermination, par le service de la couche de coordination, d'une information auxiliaire du véhicule basée sur les données de commande de base, et l'envoi, par le service de la couche de coordination, des données de commande de base, des informations auxiliaires du véhicule et des données de demande de commande à un service de la couche de gestion, les informations auxiliaires du véhicule comprenant une information sur l'état de l'obstacle, un temps jusqu'à la collision avec l'obstacle et une information de positionnement du véhicule (S30) ;
l'arbitrage, par le service de la couche de gestion, des conditions de fonctionnement d'un véhicule sur la base des données de commande de base, des informations auxiliaires du véhicule et des données de demande de commande, et l'envoi, par le service de la couche de gestion, des conditions d'exploitation au service de la couche de commande via le service de la couche de coordination (S40) ; et
le contrôle, par le service de couche de témoin, du véhicule en fonction des conditions de fonctionnement (S50).

9. Un appareil de conduite intelligente basé sur une architecture SOA, comprenant : une mémoire et un processeur, dans lequel la mémoire stocke au moins une instruction chargée et exécutée par le processeur pour implémenter le procédé de conduite intelligente basé sur l'architecture SOA selon la revendication 8.

10. Un support de stockage lisible par ordinateur stockant un programme informatique, dans lequel le programme informatique est exécuté par un processeur, le procédé de conduite intelligente basée sur l'architecture SOA selon la revendication 8 est implémentée.
